# EUROPÄISCHE PATENTSCHRIFT

(11) **EP 0 856 998 B1**
(45) Veröffentlichungstag und Bekanntmachung des Hinweises auf die Patenterteilung: **09.10.2002**
(21) Anmeldenummer: 97440128.3
(22) Anmeldetag: 08.12.1997
(51) Int. Cl.: H04Q 7/38, H04Q 7/30, H04B 7/26

(54) **Mehrere Funkfrequenzen benutzendes Funknetz sowie Funkfeststation und Steuereinrichtung dafür**
Radio network using multiple frequencies, and radio base station and control device therefor
Réseau de radiotéléphonie utilisant plusieurs fréquences, et station de base sans fil et dispositif de contrôle pour cela

(30) Priorität: 31.01.1997 DE 19703732
(43) Veröffentlichungstag der Anmeldung: 05.08.1998
(73) Patentinhaber: ALCATEL, 75008 Paris (FR)
(72) Erfinder: Degenhard, Klaus, 70435 Stuttgart (DE)
(74) Vertreter: Knecht, Ulrich Karl, Dipl.-Ing.

(56) Entgegenhaltungen:
- EP-A- 0 652 648
- WO-A-92/12481
- US-A- 5 471 503
- US-A- 5 533 025

## Beschreibung

Die Erfindung betrifft ein Funknetz, eine Steuereinrichtung für dieses Funknetz und eine Funkfeststation für dieses Funknetz nach dem Oberbegriff einer der nebengeordneten Ansprüche.

*Aus US 5,533,025 ist ein Funknetz mit mindestens einer Funkfeststation (leader station) bekannt, die zum Senden von Funksignalen an Mobilstationen (remote stations) mindestens eine von mehreren Funkfrequenzen belegt. Die Funksignale enthalten Datenpakete, die den Mobilstationen zugeordnet sind und die die Funkfeststation in frei wählbaren Zeitlagen nacheinander sendet, wobei nach dem sogenannten CSMA (carrier sense multiple access) Protokolltyp verfahren wird. Das ermöglicht einen schnellen Zugriff der Mobilstationen auf die von der Funkfeststation bereit gestellten Funkressourcen. In US 5,533,025 wird beschrieben, daß das CSMA-Übertragungsverfahren im Rahmen einer Frequenzsprungtechnik, dem sogenannten "slow frequency-hopping" anwendet wird, um eine schnelle Frequenzzuteilung einschließlich einer Synchronisation zu erreichen (s. Spalte 2, Zeilen 55-67). Dabei wechselt die Mobilstation von einer ersten Funkfrequenz, auf der sie mit der Funkfeststation kommuniziert, zu einer zweiten Funkfrequenz, auf der sie mit den anderen Mobilstationen kommuniziert (s. Spalte 3, Zeilen 15-31). Den Wechsel gibt die Funkfeststation vor durch ein sogenanntes "trailer signal" an. Durch diese Maßnahmen wird ein schneller Verbindungsaufbau erreicht. Es wird jedoch nicht beschrieben, wie mehrere Funkfeststationen zwischen mehreren* *Funkfrequenzen wechseln, um unter sich diese Funkressourcen effizient aufteilen zu können.*

*In der EP 652 648 A1 ist eine Funkfeststation für ein Funknetz beschrieben, die im TDD-Modus (Time Division Duplex), also im Zeitduplex-Modus, sendet und empfängt, wobei die Funkfeststation zusätzlich zwischen mehreren Funkfrequenzen entsprechend einem vorgegeben Frequenzsprungmuster (frequency hopping pattern) wechselt. Um eine verbesserte Sendeleistungsregelung (transmission power control) zu erzielen, ist das Frequenzsprungmuster, welches für das Sendesignal verwendet wird, zeitversetzt zu dem Muster, welches für das Empfangssignal verwendet wird (s. Spalte 4, Zeilen 36-42). Der Zeitversatz beträgt eine ganze Anzahl von N chips, da die Signale gespreizte Signale sind (direct sequence signal, s. Spalte 2, Zeilen 55-58). Es wird also eine Lösung beschrieben, wie eine Funkfeststation gespreizte TDD-Funksignale im Frequenzsprung-Verfahren senden und empfangen kann. Dort wird jedoch nicht beschrieben, wie mehrere Funkfeststationen in einem Funknetz zwischen mehreren Funkfrequenzen wechseln, um unter sich diese Funkressourcen effizient aufteilen zu können.*

Aus EP 577 959 A1 ist ein Funknetz bekannt mit mehreren Funkfeststationen, die mehrere Funkfrequenzen benutzen. Jede der Funkfeststationen belegt zum Senden von Funksignalen an Mobilstationen mindestens eine der Funkfrequenzen. Die dort beschriebenen Funksignale werden in dem sogenannten ATM-Modus übertragen (ATM: Asynchronus Transmission Mode), d.h. die Funksignale enthalten Datenpakete, die den Mobilstationen zugeordnet sind und die verschiedene Längen haben.

Aus dem Artikel "Künftige endgeräte- und personenbezogene Mobilität" von H. Armbrüster et al., aus der Fachzeitschrift "Telecom Praxis", Ausgabe Nr. 5 in 1993, Seiten 23-30, ist ein Mobilfunknetz beschrieben, bei dem auf der Luftschnittstelle zwischen einer Funkfeststation und einer Mobilstation die Funksignale im ATM-Modus, d.h. asynchron, übertragen werden (siehe dort S. 27ff). In dem Artikel werden die Vorteile einer ATM-Funkübertragung beschrieben, insbesondere den Vorteil der flexiblen Kapazität für jeden Funkkanal. Es wird dort auch eine Kombination von ATM mit einem synchronen Übertragungsverfahren nach dem sogenannten TDMA-Verfahren (Time Division Multiple Excess) angesprochen, um die Belegung der Funkfrequenzen zu verbessern. Das dort beschriebene Funknetz hat auch eine Steuereinrichtung (MSC: Mobile Switching Center), die mit Funkfeststationen (BS: Base Station) verbunden ist (siehe dort Bild 4). in dem Artikel wird nicht beschrieben, nach welchen Kriterien die Funkfeststationen die Funkfrequenzen belegen. Jedoch ist die angesprochene Kombination von ATM mit TDMA aufwendig. Außerdem verhindert es die TDMA-Struktur, die für ATM typische flexible Kanalbelegung im vollen Umfang nutzen zu können.

Aus EP 513 841 A2 ist ein Funknetz bekannt, bei dem den Mobilstationen Kanäle zugewiesen werden anhand einer Prioritätsliste, in der Feldstärkemessungen bewertet sind. Wie dort in Spalte 3, Mitte, beschrieben, werden die Funksignale nach den FDM-Funkübertragungsverfahren übertragen (FDM: Frequency Division Multiplex), d.h. jeder Funkkanal entspricht einer Frequenz und alle Frequenzen werden nacheinander belegt. Ob wiederum eine jede Funkfrequenz in mehrere Zeitkanäle aufgeteilt ist, wie dies beispielsweise bei TDMA oder ATM der Fall ist, wird in EP 513 841 A2 nicht beschrieben.

Aufgabe der Erfindung ist es, das eingangs genannte Funknetz, bei dem auf mehrere Frequenzen Funksignale asynchron übertragen werden, so zu verbessern, daß die mehreren Funkfrequenzen effizient benutzt werden können.

Gelöst wird diese Aufgabe durch ein Funknetz mit den Merkmalen nach Anspruch 1. Demnach wechselt jede Funkfeststation des Funknetzes beim Senden ihrer Funksignale zwischen mindestens zwei der Funkfrequenzen und belegt eine jede Funkfrequenz nur für eine vorgebbare Zeitspanne, die zumindest der größten Länge eines der zu sendenden Datenpakete entspricht. *Dabei belegt die Funkfeststation vor Ablauf der Zeitspanne zusätzlich auch die andere Funkfrequenz und legt während der Überlappungszeit die Datenpakete von der einen Funkfrequenz auf die andere Funkfrequenz um, wobei die Funkfeststation die eine Funkfrequenz nach Ablauf der Zeitspanne wieder frei gibt zum Zugriff durch die anderen Funkfeststationen.* Damit wird von jeder Funkfeststation eine Funkfrequenz nicht über einen längeren Zeitraum hin sondern für eine kürzere Zeitspanne belegt, wobei die Zeitspanne dem asynchronen Datenformat angepaßt ist. *Durch einen ständigen Wechsel der Belegung der Funkfrequenzen worden die Funkressourcen effizient auf die einzelnen Funkfeststationen verteilt und an den örtlichen Bedarf angepaßt. Dadurch wird das Verkehrsaufkommen im Funknetz auf möglichst wenige zu belegende Funkfrequenzen verteilt.* Es wird *auch* sichergestellt, daß jede Funkfrequenz nach Ablauf der vorgegebenen Zeitspanne wieder frei gegeben wird. Außerdem wird verhindert, daß die Funkfrequenz nicht gewechselt wird, solange ein Datenpaket noch übertragen wird.

Eine weitere Aufgabe der Erfindung ist es, eine Funkfeststation sowie eine Steuereinrichtung für das eingangs genannte Funknetz anzugeben, die mit mehreren Funkfeststationen verbunden ist. Zur Lösung dieser Aufgabe sind eine Funkfeststation und eine Steuereinrichtung mit den Merkmalen nach einem der nebengeordneten Ansprüche angegeben.

Vorteilhafte Ausgestaltungen der Erfindung sind den Unteransprüchen zu entnehmen.

Im folgenden wird die Erfindung anhand von zwei Ausführungsbeispielen und unter Zuhilfenahme der folgenden Figuren beschrieben:
Fig. 1, die schematisch den Aufbau eines erfindungsgemäßen Funknetzes zeigt, wobei die Belegung der Funkfrequenzen zu verschiedenen Zeitpunkten dargestellt ist, nämlich a) zum Zeitpunkt vor und b) zum Zeitpunkt nach dem Wechsel der Funkfrequenzen;
Fig. 2; die schematisch das Verkehrsaufkommen auf den einzelnen Funkfrequenzen zeigt, nämlich a) zum Zeitpunkt vor und b) zum Zeitpunkf nach dem Wechsel;
Fig. 3, die einen Ausschnitt aus dem Funknetz nach Fig. 1 darstellt;
Fig. 4, die als zweites Ausführungsbeispiel schematisch den Aufbau eines Funknetzes mit einer Steuereinrichtung darstellt; und
Fig. 5, die das Datenformat der Funksignale und den zeitlichen Ablauf eines Wechsels der Funkfrequenzen schematisch darstellt.

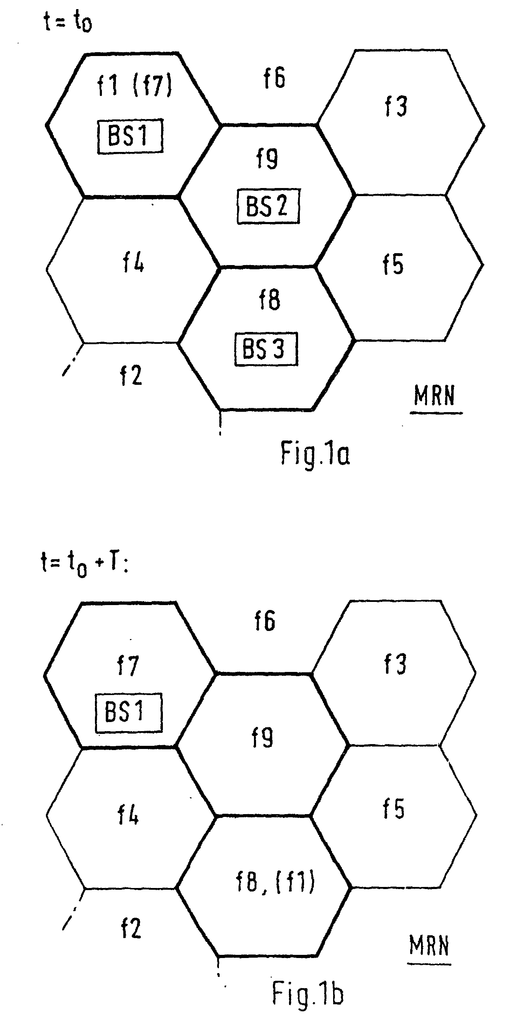

Fig. 1a und b zeigen ein Funknetz MRN mit mehreren Funkfeststationen BS1, BS2 und BS3, die zueinander benachbart sind, die mehrere Funkfrequenzen f1 bis f9 benutzen und die Funkzellen versorgen. Daher wird das Funknetz MRN im weiteren auch kurz zellulares Funknetz genannt. Jede der Funkfeststationen belegt mindestens eine dieser Funkfrequenzen, um Funksignale an Mobilstationen, die sich in der zu versorgenden Funkzelle befinden, zu senden. Fig. 1a zeigt die Belegung der Funkfrequenzen zu einem Zeitpunkt t=t₀. Zu diesem Zeitpunkt belegt beispielsweise die Funkfeststation BS1 zunächst die Funkfrequenze f1. Es soll ein Wechsel auf eine andere Funkfrequenz, nämlich auf f7, erfolgen. Diejenigen Funkfrequenzen auf die gewechselt werden soll sind in Fig. 1 in Klammern angegeben. Die Funkfeststation BS2 belegt die Funkfrequenz f9 und die Funkfeststation belegt die Funkrequenz f8. Die anderen nicht dargestellten Funkfeststationen belegen jeweils eine der anderen Funkfrequenzen f2 bis f6.

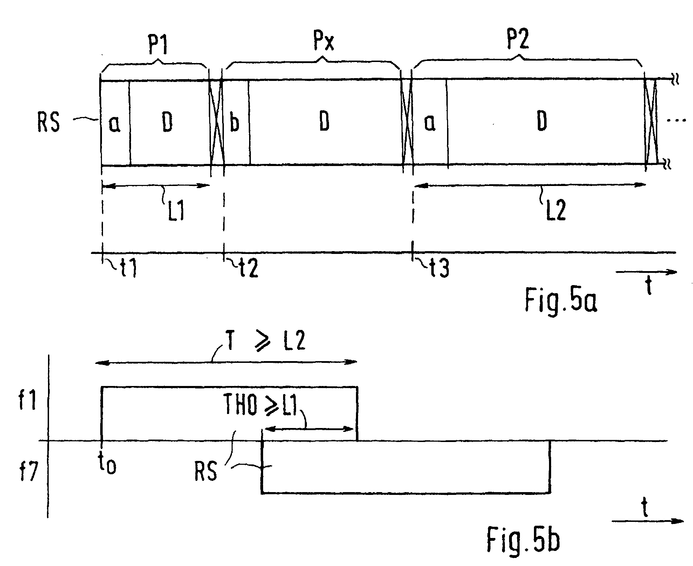

Jede Funkfeststation sendet Funksignale an die sich in ihrer Funkzelle befindenden Mobilstationen, wobei jedes Funksignal Datenpakete enthält, die den Mobilstationen zugeordnet sind und die in frei wahlbaren Zeitlagen nacheinander übertragen werden. Diese Funksignale sind demnach digitale Funksignale, die paketorientiert und asynchron übertragen werden, wie hier beispielsweise ATM-Funksignale. Ein solches Funksignal ist in Fig. 5a schematisch dargestellt und wird später noch näher beschrieben.

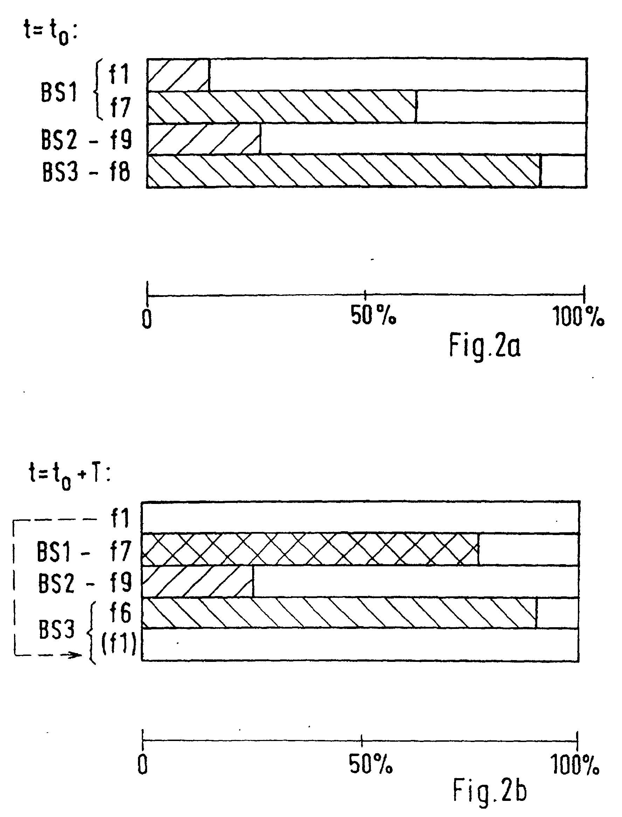

Die in Fig. 1a dargestellte Belegung der Funkfrequenzen zum Zeitpunkt t=t₀ wird nun nach Ablauf einer vorgebbaren Zeitspanne T in eine andere Belegung der Funkfrequenzen geändert, die in Fig. 1b dargestellt ist. Wie dort zu sehen, belegt die Funkfeststation BS1 zum Zeitpunkt t=t₀+T nun eine andere Funkfrequenz, nämlich die Funkfrequenz f7. Die übrigen Funkfeststationen haben ihre Belegung der Funkfrequenzen noch nicht gewechselt. Der in Fig. 1a und b dargestellte Wechsel der Funkfrequenzen hat den Zweck die Funkressourcen des Funknetzes MRN, d.h. die Funkfrequenzen f1 bis f9, effizient auf die einzelnen Funkfeststationen zu verteilen, so daß das Verkehrsaufkommen im Funknetz auf möglichst wenige zu belegende Funkfrequenzen verteilt wird. Außerdem wird, wie nachfolgend beschrieben, eine hohe Dynamik innerhalb des Funknetzes erreicht, d.h. die örtliche Verteilung der Funkressourcen an den Bedarf angepaßt. Diese Verteilung der Funkressourcen wird durch einen ständigen Wechsel der Belegung der Funkfrequenzen f1 bis f9 erreicht. Die in den Fig. 1 a und b dargestellte Verteilung der Funkressourcen zu den Zeitpunkten t₀ und t₀+T wird nun anhand der Fig. 2a und 2b näher beschrieben:

Die Fig. 2a und b zeigen das Verkehrsaufkommen auf den einzelnen Funkfrequenzen f1 bis f9 zu den Zeitpunkten t₀ bzw. t₀+T. Die Fig. 2a bezieht sich auf die Verteilung der Funkfrequenzen nach Fig. 1a und die Fig. 2b bezieht sich auf die Verteilung nach Fig. 1b.

In Fig. 2a ist die Belegung der Funkfrequenzen durch die Funkfeststationen BS1 bis BS3 zum Zeitpunkt t=t₀ dargestellt. Wie auch in Fig. 1a zu sehen, belegen die Funkfeststationen folgende Funkfrequenzen: BS1 belegt zunächst f1, BS2 belegt f9 und BS3 belegt f8. Auf jeder Funkfrequenz kann eine maximale Verkehrlast von 100% übertragen werden. Zum Zeitpunkt t=t₀ sind die Funkfrequenzen unterschiedlich stark belastet, wobei in diesem Beispiel die Funkfrequenz f8 die größte Verkehrslast trägt mit etwa 90% und die Funkfrequenz f1 die geringste Verkehrslast trägt mit etwa 20%. Die Funkfrequenzen f7 und f9 sind mit etwa 60% bzw. 30% belastet. Am Beispiel der Funkfeststationen BS1 und BS3 wird nun näher die Änderung der Belegung der Funkfrequenzen beschrieben:

Wie der Vergleich der Fig. 2b mit der Fig. 2a zeigt, hat die Funkfeststation BS1 die Trägerfrequenz f1 zum Zeitpunkt t=t₀ belegt und hat diese Funkfrequenz nach Ablauf der Zeitspanne T, d.h. zum Zeitpunkt t=t₀+T, wieder freigegeben. Die Verkehrlast von der Funkfrequenz f1 wurde dabei auf die Funkfrequenz f7 umgelegt, so daß die Verkehrslast auf f7 nun etwa 80% beträgt. Das Umlegen der Verkehrslast von einer Frequenz auf eine andere erfolgt durch einen sogenannten "intracell handover", d.h. durch eine Anweisung an die sich in der Funkzelle befindenen Mobilstationen die Funkübertragung von der einen Funkfrequenz f1 auf die andere Funkfrequenz f7 umzustellen. Die Funkfrequenz f1 ist nach Ablauf der Zeitspanne T frei für den Zugriff durch andere Funkstationen. In diesem Beispiel wird später die Funkfeststation BS3 auf f1 zugreifen, da sie die Funkfrequenz f8 bereits mit etwa 90% belastet hat und somit freie Funkresourcen benötigt.

Für das Belegen einer jeden Funkfrequenz ist die Zeitspanne T so gewählt, daß sie zumindest der Länge eines zu sendenden Datenpaketes entspricht. Wie in Fig. 5a dargestellt können die Datenpakete P1 und P2 verschiedene Längen L1 und L2 haben, wobei in diesem Beispiel die Länge L2 die größte Länge ist und zur Vorgabe der Zeitspanne T herangezogen wird. Da diese Zeitspanne T bestimmt, wie lange eine jede Funkfeststation eine der Funkfrequenzen belegt, wird erreicht, daß jedes Datenpaket, auch das größte, vollständig auf einer Funkfrequenz (z.B. f1) übertragen wird. Ein Wechsel von einer Funkfrequenz f1 auf eine andere f7 während der Übertragung eines Datenpaketes wird vermieden. Es ist vorteilhaft die Zeitspanne T so vorzugeben, daß sie einem Vielfachen der größten Länge eines zu sendenden Datenpaketes entspricht. Damit wird erreicht, daß die Funkfeststation BS1 solange auf einer Funkfrequenz f1 verweilt, bis mehrere Datenpakete übertragen worden sind. Somit wird ein zu häufiger Wechsel zwischen den Funkfrequenzen vermieden. Die hier dargestellte Länge L2 entspricht 20µs. Die Zeitspanne T umfasse hier die Dauer von 1sec..

Zum Wechsel ("intracell handover") von der einen Funkfrequenz f1 auf die andere f7, ist eine zweite Zeitspanne THO vorgegeben, die zumindest der kleinsten Länge L1 eines zu senden Datenpaketes entspricht. Während dieser zweiten Zeitspanne THO belegt die Funkfeststation BS1 beide Frequenzen f1 und f7. Demnach ist diese Zeitspanne THO die Überlappungszeit, innerhalb der der "intracell handover" durchgeführt wird. Dadurch daß THO größergleich L1 ist, wird erreicht, daß zumindest die kleinsten Datenpakete von einer Funkfrequenz auf die andere umgelegt werden können. In diesem Beispiel THO so groß gewählt, daß größere Datenpakete , vorzugweise mehrere aufeinander folgende Datenpakete umgelegt werden können; hier entspricht die zweite Zeitspanne THO einem Vielfachem von L1, nämlich dem Fünffachem (THO= 5 x 10µsec. =50µsec.). Diese Zeitspanne THO dient auch dazu, die Signalisierung und die Synchronisierung für den Zugriff auf die neue Frequenz f7 durchzuführen.

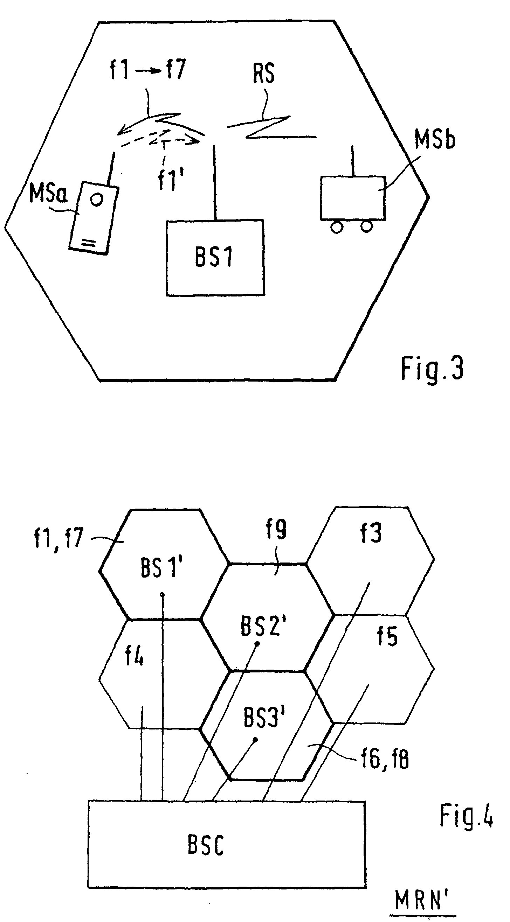

In Fig. 3 ist ein Ausschnitt aus dem zellularen Funknetz nach Fig. 1 dargestellt, der diejenige Funkzelle zeigt, die von der Funkfeststation BS1 versorgt wird. Innerhalb dieser Funkzelle befinden sich beispielsweise zwei Mobilstationen MSa und MSb. Die Funkfeststation BS1 sendet Funksignale RS an diese Mobilstationen, wobei die Funkfeststation mindestens eine der Funkfrequenzen, hier f1, belegt. In Fig. 3 ist beispielhaft dargestellt, wie die Funkfeststation BS1 an die Mobilstation MSa Funksignale auf der Funkfrequenz f1 sendet. Dabei verweilt die Funkfeststation für die bereits zuvor beschriebene Zeitdauer T auf dieser Funkfrequenz f1 und wechselt - wenn möglich- spätestens nach Ablauf dieser Zeitspanne auf die andere Funkfrequenz f7. Außerdem empfängt die Funkfeststation BS1 auch Funksignale der Mobilstation MSa auf einer anderen Funkfrequenz f1', d.h. die Funkübertragung erfolgt hier nach dem Frequenzduplexverfahren. Der Wechsel zwischen den Funkfrequenzen findet sowohl in Senderichtung (sogenannter "downlink") und in Empfangsrichtung (sogenannter "uplink") statt. In diesem Beispiel verlagert die Funkfeststation BS1 ihren Funkverkehr von der Funkfrequenz f1 auf die Funkfrequenz f7. Nach dem Wechsel wird die Funkfrequenz f1 wieder freigegeben zum Zugriff durch die anderen Funkfeststationen, hier z.B. durch BS3. Zum Wechsel zwischen den Funkfrequenzen ist eine jede Funkfeststation, z.B. BS3, in der Lage festzustellen, welche der Funkfrequenzen innerhalb des Funknetzes momentan nicht von benachbarten Funkfeststationen belegt sind.

Eine jede Funkfrequenz f1 oder f7 wird jeweils nur für die vorgegebene Zeitspanne T belegt. Dadurch ändert sich die Belegung der Funkfrequenzen innerhalb des Funknetzes sehr dynamisch, wie es zuvor bereits beschrieben wurde.

Da jede Funkfeststation, wie z.B. BS3, selbst prüft, welche Funkfrequenzen momentan frei sind, ist die Funkfeststation BS3 in der Lage sich jeder Zeit an die gegebene Frequenzbelegung anzupassen. Die sich an das Funknetz anpassende Funkfeststation kann auch als selbstkonfigurierende Funkfeststation bezeichnet werden. Als Kriterien für die Frage, ob eine Funkfrequenz frei ist und belegt werden kann, zählen u.a. Größen wie Funkempfangspegel oder Interferenz. Eine Funkfrequenz, auf der ein Interferenz mit einem hinreichend großen Störabstand von etwa 10dB und mehr gemessen wird, wird als freie Funkfrequenz angesehen. Das zellulare Funknetz nach diesem ersten Ausführungsbeispiel (s. Fig 1) enthält solche selbstkonfigurierenden Funkfeststationen und kann daher auch als dezentral organisiertes Funknetz bezeichnet werden.

In Fig. 4 ist ein zweites Ausführungsbeispiel dargestellt, bei dem ein Funknetz MRN' eine Steuereinrichtung BSC enthält, die mit mehreren Funkfeststationen BS1' bis BS3' des Funknetzes verbunden ist. Die Belegung der Funkfrequenzen in diesem Funknetz MRN' wird von dieser Steuereinrichtung BSC gesteuert, in dem diese überwacht, welche Funkfeststationen wann die Funkfrequenzen wechseln wollen. Dazu teilt eine jede Funkfeststation bei Ablauf der Zeitspanne T der Steuereinrichtung BSC mit, daß ein Wechsel der Funkfrequenz gewünscht wird. Die Steuereinrichtung löst dann für jede Funkfeststationen den Wechsel aus, wobei überwacht wird, daß niemals gleichzeitig benachbarte Funkfeststationen ihre Funkfrequenzen wechseln. Die Steuereinrichtung BSC koordiniert demnach die Funkfrequenz-Wechsel innerhalb des. Das in Fig. 4 dargestellte Funknetz MRN' des zweiten Ausführungsbeispieles ist demnach ein zentral organisiertes Funknetz.

Die Fig. 5 zeigt den Aufbau eines Funksignales und den Wechsel von Funkfrequenzen während des Sendens dieses Funksignales. In Fig. 5a ist der Aufbau des Funksignales RS schematisch dargestellt. Das Funksignal RS hat die Form eines ATM-Übertragungssignales. Das Funksignal enthält aufeinander folgende Datenpakete P1, Px, P2 usw., die den Mobilstationen zugeordnet sind und die in frei wählbaren Zeitlagen nacheinander übertragen werden. Zwischen jeweils zwei aufeinander folgenden Datenpaketen ist eine Schutzzeit (guard time) vorgesehen. Die Datenpakete nach Fig. 5a sind mit verschiedenen Längen dargestellt, wobei das erste Datenpaket P1 und das dritte Datenpaket P2 der Mobilstation MSa zugeordnet sind. Das Datenpaket Px ist der anderen Mobilstation MSb zugeordnet (vergl. Fig. 3). Die Zuordnung zu einer Mobilstation erfolgt durch eine Kennung innerhalb des Datenpaktes, hier beispielsweise durch die Kennung "a" für MSa. Die Kennung ist in einem Kennfeld innerhalb des Datenpaketes eingetragen. Neben dem Kennfeld enthält ein jedes Datenpaket ein Datenfeld D, das beispielsweise Sprach- oder Textdaten enthält. In diesem Beispiel ist das Kennfeld dem Datenfeld vorangestellt und wird daher auch als "header" bezeichnet. Das zwischen den Datenpaketen P1 und P2 sich befindende Datenpaket Px ist der anderen Mobilstation MSb zugeordnet und enthält die Kennung b innerhalb seines Kennfeldes( header). Die Folge derjenigen Datenpakete P1, P2 usw., die einer Mobilstation MSa zugeordnet sind, bilden den Funkkanal für diese Mobilstation MSa. Die Datenpakete können unterschiedliche Längen haben; hier haben das erste Datenpaket P1 die Länge L1 und das andere Datenpaket P2 die Länge L2. Unter den in Fig. 5a angegebenen Längen sei beispielhaft die L1 die kürzeste Länge und L2 die größte Länge der zu sendenden Datenpakete.

In Fig. 5b ist der Wechsel zwischen zwei Funkfrequenzen f1 und f7 dargestellt, der stattfindet während das Funksignal RS übertragen wird. Die Übertragung des Funksignales RS beginne beispielsweise zum Zeitpunkt t=t₀ auf der Funkfrequenz f1. Diese Funkfrequenz f1 wird bis zum Ablauf der vorgegebenen Zeitspanne T belegt. Die Zeitspanne T ist so vorgegeben, daß sie zumondest so groß ist wie die größte Länge L2 der zu sendenden Datenpakete. In diesem Beispiel entspricht T der fünfzigtausendfachen Länge L2 (T=50.000x20µsec = 1sec.).

Zum Wechseln von der Funkfrequenz f1 auf eine andere Funkfrequenz f7 wird vor Ablauf der Zeitspanne T auch zusätzlich die Funkfrequenz f7 belegt. Innerhalb der Überlappungszeit THO werden dann mittels des bereits beschriebenen "intracell handover" die Datenpakete (Funkkanäle) von f1 auf f7 umgelegt. Für den "intracell handover" wird die Überlappungszeit, d.h. die zweite Zeitspanne THO so vorgegeben, daß sie zumindest so groß ist wie die kleinste Länge L1 der zu sendenden Datenpakete. Beide Zeitspannen T und THO werden für die Funkfeststationen so vorgegeben, daß T um mindestens eine Größenordnung größer als THO ist.

Jede Funkfrequenz, auch f7, wird möglichst nur für die Zeitspanne T belegt. Durch diesen ständigen Wechsel der Funkfrequenz wird eine hohe Dynamik des Funknetzes erreicht. Dabei ist Zeitspanne T so gewählt, daß die zu sendenden Datenpakete jeweils vollständig auf einer Trägerfrequenz übertragen werden. Ein Wechsel der Funkfrequenz innerhalb eines Datenpaketes findet somit nicht statt. Dadurch wird auch ein Datenverlust vermieden. Die zweite Zeitspanne THO, die der Überlappungszeit entspricht, während derer beide Funkfrequenzen gleichzeitig belegt werden, ist deutlich geringer vorzugeben als die erste Zeitspanne T.

Die Belegung der Funkfrequenzen erfolgt vorteilhaft nach einem Prioritätsschema wie folgt:

Im Falle des dezentralen Funknetzes (Fig. 1) verfügt jede Funkfeststation über eine Liste mit freien Frequenzen und mit den gemessenen Werten, wie z.B. Empfangspegel und/oder Interferenzen. Die gemessenen Empfangspegel und/oder Interferenzen geben an, welche der freien Funkfrequenzen besser als die übrigen für eine Belegung geeignet ist. Anhand der gemessenen Werte erstellt nun jede Funkfeststation eine Prioritätsliste, in der die Funkfrequenzen mit einem niedrigen Empfangspegel und/oder mit einer geringen Interferenz eine höhere Priorität zukommt als den übrigen Funkfrequenzen. Diese Prioritätsliste gibt die Quantität und die relative Qualität der momentan verfügbaren Funkresourcen an. Die Prioritätsliste wird fortlaufend auf den aktuellen Stand gebracht. Im Falle des dezentralen Funknetzes (Fig. 4) erstellt die Steuereinrichtung eine solche Prioritätsliste.

Zum Zugriff auf eine freie Frequenz wird die Prioritätsliste ausgewertet und es wird vorzugweise diejenige Funkfrequenz belegt, die die höchste Priorität hat. Als Kritrium für die Priorität kann auch die Zeitdauer herangezogen werden, die vergangen ist, seit die Funkfeststation zuletzt die Funkfrequenz belegt hat. Je größer diese Zeitdauer, desto höher ist die Priorität für diese Funkfrequenz. Durch diese Maßnahme wird erreicht, daß jede Funkfeststation alle Funkfrequenzen des Funknetzes etwa gleich häufig belegt.

Die oben beschriebenen Ausführungsbeispiele sind auf zellulare Funknetze gerichtet, bei denen nach dem Frequenzduplex-Verfahren gesendet und empfangen wird. Es ist auch denkbar die Erfindung einzusetzen in anderen Funknetzen, die beispielsweise keine Mobilstationen enthalten, sondern lediglich fest installierte Funkstationen (beispielsweise drahtlose Computervernetzung), oder bei denen eine andere Funkübertragung, beispielsweise eine Zeitduplexübertragung oder lediglich eine Simplexübertragung stattfindet. Es sind zahlreiche andere Ausführungsbeispiele der Erfindung denkbar und die Erfindung soll nicht auf die konkret beschriebenen Ausführungsbeispiele beschränkt sein.

## Patentansprüche

1. Funknetz (MRN; MRN') mit *mindestens einer Funkfeststation (BS1)*, *bei dem die* Funkfeststation (BS1) zum Senden von Funksignalen (RS) an Mobilstationen (MSa, MSb) mindestens eine Funkfrequenzen (f1) von mehreren Funkfrequenzen (f1 bis f9) belegt, bei dem die Funksignale Datenpakete (P1, P2) enthalten, die den Mobilstationen zugeordnet sind und die die Funkfeststation (BS1) in frei wählbaren Zeitlagen (t1, t2, t3) nacheinander sendet,
*bei dem die* Funkfeststation (BS1) beim Senden ihrer Funksignale (RS) zwischen mindestens zwei der Funkfrequenzen (f1, f7) wechselt und *bei dem* die Funkfeststation (BS1) eine jede Funkfrequenz (f1, f7) nur für eine vorgebbare Zeitspanne (T) belegt, die zumindest der Länge (L2) eines der zu sendenden Datenpakete (P2) entspricht, und dann über den Wechsel zwischen den Funkfrequenzen (f1, f7) entscheidet,
***dadurch gekennzeichnet, daß***
*das Funknetz (MRN; MRN') mehrere Funkfeststationen (BS1, bis BS3) hat, die die mehreren Funkfrequenzen (f1 bis f9) benutzen, wobei durch den Wechsel der Belegung der Funkfrequenzen (f1 bis f9) eine örtliche Verteilung von Funkressourcen an den Bedarf angepaßt wird, daß*
*die Funkfeststation (BS1) vor Ablauf der Zeitspanne (T) zusätzlich zu der einen Funkfrequenz (f1) auch die andere Funkfrequenz (f7) belegt und daß die Funkfeststation (BS1) während einer Überlappungszeit (THO) die Datenpakete von der einen Funkfrequenz (f1) auf die anders Funkfrequenz (f7) umlegt und noch Ablauf der Zeitspanne (T) die eine Funkfrequenz (f1) wieder frei gibt zum Zugriff durch die anderen Funkfeststationen (BS2, BS3).*

2. Funknetz (MRN) nach Anspruch 1, **dadurch gekennzeichnet, daß** die Funkfeststation (BS1) Empfangspegel auf den nicht von ihr belegten Funkfrequenzen mißt und diese für die Entscheidung über den Wechsel auswertet.

3. Funknetz (MRN) nach Anspruch 1, **dadurch gekennzeichnet, daß** die Funkfeststation (BS1) die Funksignale (RS) im asynchronen Transfermodus sendet und daß die Zeitspanne (T) zumindest der größten Länge (L2) eines der zu sendenden Datenpakete (P2) entspricht.

4. Funknetz (MRN) nach Anspruch 3, **dadurch gekennzeichnet, daß** die vorgebbare Zeitspanne (T) einem Vielfachen der größten Länge (L2) eines der Datenpakete (P2) entspricht.

5. Funknetz (MRN) nach Anspruch 3, **dadurch gekennzeichnet, daß** die Funkfeststation (BS1) beim Wechsel zwischen zwei der Funkfrequenzen (f1, f7) diese beiden Funkfrequenzen gleichzeitig für die Dauer einer zweiten, vorgebbaren Zeitspanne (THO) belegt, die zumindest der kleinsten Länge (L1) eines der zu sendenden Datenpakete (P2) entspricht.

6. Funknetz (MRN) nach Anspruch 4, **dadurch gekennzeichnet, daß** die zweite Zeitspanne (THO) in Abhängigkeit von der Größe des Verkehrsaufkommens im Funknetz vorgegeben ist, wobei die Größe der zweiten Zeitspanne (THO) sich proportional zur Größe des Verkehrsaufkommens verhält.

7. Funknetz (MRN) nach Anspruch 1, **dadurch gekennzeichnet, daß** die Funkfeststation (BS1) von den Mobilstationen (MSa, MSb) auch Funksignale empfängt, die Datenpakete enthalten, und daß die Funkfeststation (BS1) beim Empfang eines jeden Funksignales für dieselbe vorgebbare Zeitspanne (T) eine andere der Funkfrequenzen (f1') belegt.

8. Funknetz (MRN') nach Anspruch 1, **dadurch gekennzeichnet, daß** das Funknetz eine mit den Funkfeststationen verbundene Steuereinrichtung (BSC) enthält, die für die Funkfeststationen (BS1 bis BS3) den Wechsel zwischen den Funkfrequenzen überwacht, und die einen jeden Wechsel auslöst, um zu verhindern, daß zueinander benachbarte Funkfeststationen (BS1, BS2) gleichzeitig die Funkfrequenzen wechseln.

9. Steuereinrichtung (BSC) für ein Funknetz (MRN'), bei dem *mindestens eine Funkfeststation (BS1) des Funknetzes* zum Senden von Funksignalen (RS) an Mobilstationen (MSa, MSb) mindestens eine Funkfrequenz (f1) *von mehreren Funkfrequenzen (f1 bis f9)* belegt, bei dem die Funksignale Datenpakete (P1, P2) enthalten, die den Mobilstationen zugeordnet sind und die die Funkfeststation (BS1) in frei wählbaren Zeitlagen (t1, t2, t3) nacheinander sendet,
*bei dem die* Funkfeststation (BS1) beim Senden ihrer Funksignale (RS) zwischen mindestens zwei der Funkfrequenzen (f1, f7) wechselt und *bei dem* die Funkfeststation (BS1) eine jede Funkfrequenz (f1, f7) nur für eine vorgebbare Zeitspanne (T) belegt, die zumindest der Länge (L2) eines der zu sendenden Datenpakete (P2) entspricht, und dann über den Wechsel zwischen den Funkfrequenzen (f1, f7) entscheidet, bei dem
*mehrere Funkfeststationen (BS1, bis BS3) sich befinden die die mehreren Funkfrequenzen (f1 bis f9) benutzen, wobei durch den Wechsel der Belegung der Funkfrequenzen (f1 bis f9) eine örtliche Verteilung von Funkressourcen an den Bedarf angepaßt wird,*
***dadurch gekennzeichnet,***
***daß*** *die Steuereinrichtung (BSC) mit den Funkfeststationen verbunden ist und für jede Funkfeststation den Wechsel zwischen den Funkfrequenzen so steuert, daß die Funkfeststation (BS1) vor Ablauf der Zeitspanne (T) zusätzlich zu der einen Funkfrequenz (f1) auch die andere Funkfrequenz (f7) belegt und daß die Funkfeststation (BS1) während einer Überlappungszeit (THO) die Datenpakete von der einen Funkfrequenz (f1) auf die andere Funkfrequenz (f7) umlegt und nach Ablauf der Zeitspanne (T) die eine Funkfrequenz (f1) wieder frei gibt zum Zugriff durch die anderen Funkfeststationen (BS2, BS3), wobei die eine Funkfeststation (BS1) nicht zeitgleich mit einer der anderen Funkfeststationen (BS2, BS3) die Funkfrequenzen wechselt.*

10. Funkfeststation (BS1) für ein Funknetz (MRN), die zum Senden von Funksignalen (RS) an Mobilstationen (MSa, MSb) mindestens eine Funkfrequenz (f1) von mehreren im Funknetz benutzbaren Funkfrequenzen belegt und deren Funksignale Datenpakete (P1, P2) enthalten, die den Mobilstationen zugeordnet sind und die die Funkfeststation (BS1) in frei wählbaren Zeitlagen (t1, t2, t3) nacheinander sendet,
*bei der* die Funkfeststation (BS1) beim Senden ihrer Funksignale (RS) zwischen mindestens zwei der Funkfrequenzen (f1, f7) wechselt und *bei der* die Funkfeststation (BS1) eine jede Funkfrequenz (f1, f7) nur für eine vorgebbare Zeitspanne (T) belegt, die zumindest der Länge (L2) eines der zu sendenden Datenpakete (P2) entspricht, und dann über den Wechsel zwischen den Funkfrequenzen (f1, f7) entscheidet, wobei
***daß***
*das Funknetz (MRN) mehrere Funkfeststationen (BS1, bis BS3) hat, die die mehreren Funkfrequenzen (f1 bis f9) benutzen, wobei durch den Wechsel der Belegung der Funkfrequenzen (f1 bis f9) eine örtliche Verteilung von Funkressourcen an den Bedarf angepaßt wird,*
***dadurch gekennzeichnet***,
*die Funkfeststation (BS1) vor Ablauf der Zeitspanne (T) zusätzlich zu der einen Funkfrequenz (f1) auch die andere Funkfrequenz (f7) belegt und daß die Funkfeststation (BS1) während einer Überlappungszeit (THO) die Datenpakete von der einen Funkfrequenz (f1) auf die andere Funkfrequenz (f7) umlegt und nach Ablauf der Zeitspanne (T) die eine Funkfrequenz (f1) wieder frei gibt zum Zugriff durch die anderen Funkfeststationen (BS2, BS3).*

## Claims

1. Mobile radio network (MRN; MRN') with at least one base station (BS1), in which the base station (BS1) occupies at least one radio frequency (f1) of multiple radio frequencies (f1 to f9) to transmit radio signals (RS) to mobile stations (MSa, MSb), in which the radio signals include data packets (P1, P2) which are assigned to the mobile stations, and which the base station (BS1) transmits in succession in freely chosen timing relationships (t1, t2, t3), in which the base station (BS1) switches between at least two of the radio frequencies (f1, f7) to transmit its radio signals (RS), and in which the base station (BS1) occupies each radio frequency (f1, f7) only for a specifiable time period (T) which corresponds at least to the length (L2) of one of the data packets (P2) to be transmitted, and then decides on the switch between the radio frequencies (f1, f7),
**characterised in that**
the mobile radio network (MRN; MRN') has multiple base stations (BS1 to BS3) which use the multiple radio frequencies (f1 to f9), whereas by changing the occupancy of the radio frequencies (f1 to f9) a local distribution of radio resources is adapted to requirements, that before the time period (T) expires, the base station (BS1) occupies the other radio frequency (f7) in addition to the first radio frequency (f1), and that during an overlap time (THO) the base station (BS1) transfers the data packets from the first radio frequency (f1) to the other radio frequency (f7), and after the time period (T) expires, releases the first radio frequency (f1) for access by the other base stations (BS2, BS3).

2. Mobile radio network (MRN) according to Claim 1, **characterised in that** the base station (BS1) measures reception levels on the radio frequencies which it does not occupy and evaluates them for the decision about the switch.

3. Mobile radio network (MRN) according to Claim 1, **characterised in that** the base station (BS1) transmits the radio signals (RS) in asynchronous transfer mode, and that the time period (T) corresponds at least to the greatest length (L2) of one of the data packets (P2) to be transmitted.

4. Mobile radio network (MRN) according to Claim 3, **characterised in that** the specifiable time period (T) corresponds to a multiple of the greatest length (L2) of one of the data packets (P2).

5. Mobile radio network (MRN) according to Claim 3, **characterised in that** the base station (BS1), while switching between two of the radio frequencies (f1, f7), occupies both these radio frequencies simultaneously for the duration of a second, specifiable time period (THO), corresponding at least to the smallest length (L1) of one of the data packets (P2) to be transmitted.

6. Mobile radio network (MRN) according to Claim 4, **characterised in that** the second time period (THO) is specified depending on the quantity of traffic in the mobile radio network, whereas the magnitude of the second time period (THO) is proportional to the quantity of traffic.

7. Mobile radio network (MRN) according to Claim 1, **characterised in that** the base station (BS1) also receives radio signals containing data packets from the mobile stations (MSa, MSb), and that the base station (BS1), when it receives each radio signal, occupies another of the radio frequencies (f1') for the same specifiable time period (T).

8. Mobile radio network (MRN') according to Claim 1, **characterised in that** the mobile radio network includes a control device (BSC), which is connected to the base stations, which monitors the switching between the radio frequencies for the base stations (BS1 to BS3), and which initiates each change to prevent adjacent base stations (BS1, BS2) changing the radio frequencies simultaneously.

9. Control device (BSC) for a mobile radio network (MRN'), in which at least one base station (BS1) of the mobile radio network occupies at least one radio frequency (f1) of multiple radio frequencies (f1 to f9) to transmit radio signals (RS) to mobile stations (MSa, MSb), in which the radio signals include data packets (P1, P2) which are assigned to the mobile stations, and which the base station (BS1) transmits in succession in freely chosen timing relationships (t1, t2, t3), in which the base station (BS1) switches between at least two of the radio frequencies (f1, f7) to transmit its radio signals (RS), and in which the base station (BS1) occupies each radio frequency (f1, f7) only for a specifiable time period (T) which corresponds at least to the length (L2) of one of the data packets (P2) to be transmitted, and then decides on the switch between the radio frequencies (f1, f7), in which there are multiple base stations (BS1 to BS3) which use the multiple radio frequencies (f1 to f9), whereas by changing the occupancy of the radio frequencies (f1 to f9) a local distribution of radio resources is adapted to requirements,
**characterised in that**
the control device (BSC) is connected to the base stations and controls the switch between radio frequencies for each base station in such a way that before the time period (T) expires, the base station (BS1) occupies the other radio frequency (f7) in addition to the first radio frequency (f1), and that during an overlap time (THO) the base station (BS1) transfers the data packets from the first radio frequency (f1) to the other radio frequency (f7), and after the time period (T) expires, releases the first radio frequency (f1) for access by the other base stations
(BS2, BS3), whereas the first base station (BS1) does not change the radio frequencies simultaneously with one of the other base stations (BS2, BS3).

10. Base station (BS1) for a mobile radio network (MRN), which occupies at least one radio frequency (f1) of multiple radio frequencies which can be used in the mobile radio network to transmit radio signals (RS) to mobile stations (MSa, MSb), the radio signals of which include data packets (P1, P2) which are assigned to the mobile stations, and which the base station (BS1) transmits in succession in freely chosen timing relationships (t1, t2, t3), in which the base station (BS1) switches between at least two of the radio frequencies (f1, f7) to transmit its radio signals (RS), and in which the base station (BS1) occupies each radio frequency (f1, f7) only for a specifiable time period (T) which corresponds at least to the length (L2) of one of the data packets (P2) to be transmitted, and then decides on the switch between the radio frequencies (f1, f7), whereas the mobile radio network (MRN) has multiple base stations (BS1 to BS3) which use the multiple radio frequencies (f1 to f9), whereas by changing the occupancy of the radio frequencies (f1 to f9) a local distribution of radio resources is adapted to requirements,
**characterised in that**
before the time period (T) expires, the base station (BS1) occupies the other radio frequency (f7) in addition to the first radio frequency (f1), and that during an overlap time (THO) the base station (BS1) transfers the data packets from the first radio frequency (f1) to the other radio frequency (f7), and after the time period (T) expires, releases the first radio frequency (f1) for access by the other base stations (BS2, BS3).

## Revendications

1. Réseau de radiotéléphonie (MRN; MRN') avec au moins une station de base (BS1), dans lequel la station de base (BS1) occupe au moins une fréquence radio (f1) parmi plusieurs fréquences radio (f1 à f9) pour l'émission de signaux radio (RS) à des stations mobiles (MSa, MSb), dans lequel les signaux radio contiennent des paquets de données (P1, P2) qui sont affectés aux stations mobiles et que la station de base (BS1) émet les uns après les autres selon des chronologies librement sélectionnables (t1, t2, t3), dans lequel la station de base (BS1) alterne, lors de l'émission de ses signaux radio (RS), entre au moins deux des fréquences radio (f1, f7) et dans lequel la station de base (BS1) occupe chaque fréquence radio (f1, f7) seulement pendant un intervalle de temps prédéfinissable T qui correspond à au moins la longueur (L2) de l'un des paquets de données à émettre (P2) et qui décide ensuite du changement entre les fréquences radio (f1, f7),
**caractérisé en ce que**
le réseau de radiotéléphonie (MRN; MRN') comporte plusieurs stations de base (BS1 à BS3) qui utilisent plusieurs fréquences radio (f1 à f9), le changement de l'occupation des fréquences radio (f1 à f9) permettant d'obtenir une répartition locale des ressources de radiotéléphonie adaptée aux besoins, **en ce que** la station de base (BS1) occupe, en plus de la fréquence radio (f1), également l'autre fréquence radio (f7) avant l'écoulement de l'intervalle de temps (T) et **en ce que**, pendant une durée de chevauchement (THO), la station de base (BS1) transfère les paquets de données de la fréquence radio (f1) à l'autre fréquence radio (f7) et, après écoulement de l'intervalle de temps (T), libère de nouveau la fréquence (f1) pour l'accès par les autres stations de base (BS2, BS3).

2. Réseau de radiotéléphonie (MRN) selon la revendication 1, **caractérisé en ce que** la station de base (BS1) mesure les niveaux de réception sur les fréquences radio qu'elle n'occupe pas et les évalue pour décider du changement.

3. Réseau de radiotéléphonie (MRN) selon la revendication 1, **caractérisé en ce que** la station de base (BS1) émet les signaux radio (RS) en mode transfert asynchrone et **en ce que** l'intervalle de temps (T) correspond à au moins la plus grande longueur (L2) de l'un des paquets de données à émettre (P2).

4. Réseau de radiotéléphonie (MRN) selon la revendication 3, **caractérisé en ce que** l'intervalle de temps prédéfinissable (T) correspond à un multiple de la plus grande longueur (L2) de l'un des paquets de données.

5. Réseau de radiotéléphonie (MRN) selon la revendication 3, **caractérisé en ce que** la station de base (BS1), lors du changement entre deux des fréquences radio (f1, f7), occupe simultanément ces deux fréquences radio pendant la durée d'un deuxième intervalle de temps prédéfinissable (THO) qui correspond à au moins la plus petite longueur (L1) de l'un des paquets de données à émettre (P2).

6. Réseau de radiotéléphonie (MRN) selon la revendication 4, **caractérisé en ce que** le deuxième intervalle de temps (THO) est prédéfini en fonction du volume des radiocommunications dans le réseau de radiotéléphonie, le volume du deuxième intervalle de temps (THO) étant proportionnel au volume des radiocommunications.

7. Réseau de radiotéléphonie (MRN) selon la revendication 1, **caractérisé en ce que** la station de base (BS1) reçoit également des signaux radio des stations mobiles (MSa, MSb) qui contiennent des paquets de données et **en ce que** la station de base (BS1), lors de la réception de chaque signal radio, occupe une autre des fréquences radio (f1') pour le même intervalle de temps prédéfinissable (T).

8. Réseau de radiotéléphonie (MRN) selon la revendication 1, **caractérisé en ce que** le réseau de radiotéléphonie comprend un dispositif de contrôle (BSC) relié aux stations de base qui contrôle le changement entre les fréquences radio pour les stations de base (BS1 à BS3) et qui déclenche chaque changement pour éviter que des stations de base voisines les unes des autres (BS1, BS2) ne changent de fréquences radio en même temps.

9. Dispositif de contrôle (BSC) pour un réseau de radiotéléphonie (MRN), dans lequel au moins une station de base (BS1) du réseau de radiotéléphonie occupe au moins une des fréquences radio (f1) parmi plusieurs fréquences radio (f1 à f9) pour l'émission de signaux radio (RS) à des stations mobiles (MSa, MSb), dans lequel les signaux radio contiennent des paquets données (P1, P2) qui sont affectés aux stations mobiles et que la station de base (BS1) émet les uns après les autres selon des chronologies librement sélectionnables (t1, t2, t3), dans lequel la station de base (BS1), lors de l'émission de ses signaux radio (RS), alterne entre au moins deux des fréquences radio (f1, f7) et dans lequel la station de base (BS1) occupe chaque fréquence radio (f1, f7) seulement pendant un intervalle de temps prédéfinissable (T) qui correspond au moins à la longueur (L2) de l'un des paquets de données à émettre (P2) et décide ensuite du changement entre les fréquences radio (f1, f7), dans lequel se trouvent plusieurs stations de base (BS1 à BS3) qui utilisent plusieurs fréquences radio (f1 à f9), le changement d'occupation des fréquences radio (f1 à f9) permettant d'adapter une répartition locale des ressources de radiotéléphonie aux besoins,
**caractérisé en ce que** le dispositif de contrôle (BSC) est relié aux stations de base et contrôle le changement entre les fréquences radio pour chaque station de base de manière à ce que la station de base (BS1) occupe, en plus de la fréquence radio (f1), également l'autre fréquence radio (f7) avant l'écoulement de l'intervalle de temps (T) et **en ce que** la station de base (BS1) transfère les paquets de données de la fréquence radio (f1) à l'autre fréquence radio (f7) pendant une durée de chevauchement (THO) et, après écoulement de l'intervalle de temps (T), libère de nouveau la fréquence radio (f1) pour l'accès par les autres stations de base (BS2, BS3), la station de base (BS1) ne changeant pas les fréquences radio en même temps que l'une des autres stations de base (BS2, BS3).

10. Station de base (BS1) pour un réseau de radiotéléphonie (MRN) qui, pour l'émission de signaux radio (RS) vers des stations mobiles (MSa, MSb), occupe au moins une fréquence radio (f1) parmi plusieurs fréquences radio utilisables dans le réseau de radiotéléphonie et dont les signaux radio contiennent des paquets de données (P1, P2) qui sont affectés aux stations mobiles et que la station de base (BS1) émet les uns après les autres selon des chronologies librement sélectionnables (t1, t2, t3), dans laquelle la station de base (BS1), lors de l'émission de ses signaux radio (RS), alterne entre au moins deux des fréquences radio (f, f7) et dans laquelle la station de base (BS) occupe chaque fréquence radio (f1, f7) seulement pendant un intervalle de temps prédéfinissable (T) qui correspond au moins à la longueur (L2) de l'un des paquets de données à émettre (P2) et décide ensuite du changement entre les fréquences radio (f1, f7), le réseau de radiotéléphonie (MRN) comportant plusieurs stations de base (BS1 à BS3) qui utilisent plusieurs fréquences radio (f1 à f9), le changement de l'occupation des fréquences radio (f1 à f9) permettant d'obtenir une répartition locale des ressources de radiotéléphonie adaptée aux besoins, **caractérisée en ce que** la station de base (BS1) occupe, en plus de la fréquence radio (f1), également l'autre fréquence radio (f7) avant l'écoulement de l'intervalle de temps (T) et **en ce que**, pendant une durée de chevauchement (THO), la station de base (BS1) transfère les paquets de données de la fréquence radio (f1) à l'autre fréquence radio (f7) et, après écoulement de l'intervalle de temps (T), libère de nouveau la fréquence (f1) pour l'accès par les autres stations de base (BS2, BS3).
